# FASCICULE DE BREVET EUROPEEN

(11) **EP 1 931 104 B1**
(45) Date de publication et mention de la délivrance du brevet: **17.06.2009**
(21) Numéro de dépôt: 07291241.3
(22) Date de dépôt: 11.10.2007
(51) Int. Cl.: H04L 29/06

(54) **Procédé de contrôle de l'établissement de canaux de communication multimédia**
Verfahren zur Kontrolle des Aufbaus von Multimedia-Kommunikationskanälen
Method for controlling the establishment of multimedia communication channels

(30) Priorité: 06.12.2006 FR 0610629
(43) Date de publication de la demande: 11.06.2008
(73) Titulaire: Societé Française du Radiotéléphone, 75008 Paris (FR)
(72) Inventeur: Bouvier, Christian, 78120 Rambouillet (FR); Wary, Jean-Philippe, 92340 Bourg la Reine (FR)
(74) Mandataire: Debay, Yves

(56) Documents cités:
- EP-A- 1 650 925
- US-B1- 7 024 461
- ELWELL SIEMENS J MCMILLEN AVAYA JF REY/O ROUSSEAU ALCATEL J: "Tunnelling of QSIG over SIP" IETF STANDARD-WORKING-DRAFT, INTERNET ENGINEERING TASK FORCE, IETF, CH, no. 3, janvier 2005 (2005-01), XP015037819 ISSN: 0000-0004
- MILLS-TETTEY G A ET AL INSTITUTE OF ELECTRICAL AND ELECTRONICS ENGINEERS: "Mobile voice over IP (MVOIP): an application-level protocol for call hand-off in real time applications" CONFERENCE PROCEEDINGS OF THE 2002 IEEE INTERNATIONAL PERFORMANCE, COMPUTING, AND COMMUNICATIONS CONFERENCE. (IPCCC). PHOENIX, AZ, APRIL 3 - 5, 2002, IEEE INTERNATIONAL PERFORMANCE, COMPUTING AND COMMUNICATIONS CONFERENCE, NEW YORK, NY : IEEE, US, vol. CONF. 21, 3 avril 2002 (2002-04-03), pages 271-279, XP010588379 ISBN: 0-7803-7371-5

## Description

### DOMAINE TECHNIQUE DE L'INVENTION

La présente invention concerne les télécommunications utilisant les protocoles de téléphonie sur IP (Internet Protocol) ou d'établissement de session multimédia, et plus particulièrement, dans le but de contrôler l'établissement de canaux de communication dans un réseau géré par un opérateur, un procédé et un système de gestion de sessions multimédia.

### ARRIERE-PLAN TECHNOLOGIQUE DE L'INVENTION

Un réseau de données bien connu est Internet. Dans un domaine IP (Internet Protocol), le réseau de données est ouvert, ce qui signifie que n'importe quels terminaux peuvent communiquer deux à deux, par exemple en utilisant un même protocole de signalisation. Des sessions de type multimédia peuvent être ainsi créées via le réseau Internet entre deux terminaux de communication. La convergence entre les réseaux de voix et les réseaux de données est permise par utilisation de protocoles de signalisation adaptés.

La technologie voix sur IP ou VoIP et plus généralement les technologies permettant l'établissement de sessions multimédia utilisent le plus fréquemment le protocole SIP (Session Initiation protocol), qui est un standard ouvert interopérable. D'autres protocoles de signalisation, par exemple H323, MGCP (Media Gateway Control Protocol) et Megaco (ce dernier protocole ayant été choisi dans la norme UMTS par le 3GPP pour le contrôle des passerelles Media Gateways) peuvent aussi être utilisés pour les sessions multimédia.

Le protocole SIP est normalisé par l'IETF (Internet Engineering Task Force) et décrit en particulier par le RFC 3261. Le protocole SIP, comme les protocoles H323 et MGCP, a été conçu pour établir, modifier et terminer des sessions multimédia. Il se charge de l'authentification et la localisation des multiples participants. Il se charge également de la négociation sur les types de média utilisables par les différents participants en encapsulant des messages SDP (Session Description Protocol). Le protocole SIP ne transporte pas les données échangées durant la session comme la voix ou la vidéo. Ce protocole étant indépendant de la transmission des données, tout type de données et de protocoles peut être utilisé pour cet échange : c'est le protocole RTP (Real-time Transport Protocol) qui assure le plus souvent les sessions audio et vidéo. Un intérêt du protocole SIP est qu'il n'est pas seulement destiné à la voix sur IP mais également à de nombreuses autres applications telles que la visiophonie, la messagerie instantanée, la réalité virtuelle ou même les jeux vidéo.

Comme tout protocole de signalisation, SIP incorpore une phase de déclaration auprès du réseau de rattachement, puis des phases de demande d'établissement de session multimédia, de négociation de caractéristiques du service demandé et enfin une phase de clôture de la session multimédia. Le protocole d'initiation de protocole SIP (Session Initiation Protocol) permet à partir de la version v2.0 des échanges d'informations entre les entités en communication avant ou pendant la session multimédia. De manière connue en soi, ces échanges peuvent être réalisés au travers des méthodes suivantes :
- INFO : permet d'échanger de l'information n'affectant pas l'état de l'appel (décrit dans RFC 2976). Dans certains cas ce champ est utilisé pour transférer des tonalités DTMF.
- NOTIFY : permet d'envoyer des notifications d'événement (RFC 3265).
- SUBSCRIBE : permet de s'abonner à une notification d'événements (décrit dans RFC 3265).
- UPDATE : est utilisée pour mettre à jour les paramètres média (cf. RFC 3311) ;
- MESSAGE : cette méthode définie dans la RFC 3428 « SIP extension for Instant Messaging » permet d'échanger des messages instantanés entre deux terminaux.

Dans un réseau de radiotéléphonie par exemple, l'utilisation de tels protocoles (SIP / H323 / MGCP) pour des sessions multimédia peut permettre des échanges d'informations à travers des canaux de données parallèles aux canaux de voix. Mais l'inconvénient de ces méthodes d'échange d'information est qu'elles ne sont pas toujours supportées par les réseaux sous-jacents et/ou les terminaux simples.

### DESCRIPTION GENERALE DE L'INVENTION

La présente invention a donc pour objet de supprimer un ou plusieurs des inconvénients de l'art antérieur en définissant un procédé permettant des nouvelles utilisations du protocole de signalisation en profitant au maximum des potentialités de l'infrastructure réseau supportant ce type de protocole.

Un enseignement selon l'invention montre pour cela une manière d'utiliser les méthodes élémentaires, nécessaires à l'établissement d'une session multimédia, et une façon de les acheminer par l'ensemble des réseaux. Au travers d'un nouvel usage, en conformité avec les normes, ces méthodes simples sont par exemple capables de résoudre le problème de renégociation en temps réel de la qualité négociée pour la session multimédia déjà établie.

Le document EP-A-1650925 explique un procédé de contrôle de l'établissement de canaux d'échanges pour permettre une transmission d'informations multimédia entre au moins deux terminaux de communication connectés entre eux par un réseau de télécommunications, comprenant une étape d'établissement d'une communication entre un premier terminal de communication et un second terminal de communication par utilisation d'applications respectives gérant un protocole de signalisation déterminé permettant d'initier des sessions, le premier terminal effectuant une étape de sélection d'au moins un canal d'échange de données entre les deux terminaux, l'étape de sélection s'effectue à un niveau applicatif et l'étape d'établissement d'une communication comprend l'étape suivante :
- une étape d'émission d'au moins une requête par le premier terminal, à destination du second terminal, en ouvrant une session selon le protocole de signalisation déterminé.

L'invention développe ce procédé en ajoutant une étape d'envoi par le second terminal d'une réponse représentative d'une indisponibilité pour clôturer la session selon le protocole de signalisation déterminé ; et le procédé comprenant lors des étapes d'émission et d'envoi une étape de transmission d'informations additionnelles en sus dudit protocole de signalisation, par utilisation dudit canal d'échange de données sélectionné, ce canal d'échange de données étant accessible via un champ purement descriptif/explicatif de caractéristiques d'une session, lesdites informations additionnelles correspondant à des informations applicatives non nécessaires à la gestion de sessions multimédia.

L'invention permet ainsi de contrôler l'émergence de solutions à un niveau application permettant des usages innovants/inhabituels des infrastructures (SIP ou IMS notamment) d'un opérateur de réseau. Le fonctionnement intrinsèque du protocole de signalisation (par exemple SIP) reste inchangé de façon à pouvoir bénéficier d'une infrastructure réseau élémentaire au niveau mondial. On comprend que le procédé peut permettre d'élargir avantageusement l'usage des méthodes du protocole de signalisation afin par exemple d'échanger des informations de signalisation en rapport au service et/ou à sa qualité et à sa délivrance autrement que par le canal data alloué (RTP) entre les entités communicantes. L'échange par cette voie inédite (via des champs contextuels) d'informations applicatives permet d'assurer un service en temps réel.

Selon une autre particularité, le procédé comprend une étape d'identification par le premier terminal d'au moins un canal d'échange de données susceptible d'être utilisé pour l'étape de transmission d'informations additionnelles, l'identification résultant d'une étape de recherche de canaux d'échanges, dans laquelle le premier terminal analyse au moins une réponse du second terminal à une requête dans laquelle un des champs purement descriptifs a été renseigné avec des informations additionnelles en sus dudit protocole de signalisation.

Selon une autre particularité, l'étape de recherche de canaux d'échanges comprend une étape d'envoi par le second terminal d'un ensemble de messages de réponse à des requêtes du premier terminal.

Selon une autre particularité, le canal d'échange de données sélectionné est utilisé pour diffuser de bout en bout des informations multimédia.

Selon une autre particularité, l'étape de sélection comprend une sélection de plusieurs canaux d'échange de données pour utiliser plusieurs méthodes de transmission d'informations additionnelles en parallèle.

Selon une autre particularité, le procédé comprend une étape de négociation de moyens de communication en temps réel entre un client du premier terminal et un serveur au travers d'une infrastructure de communication ayant une capacité d'acheminer au travers d'informations et de messages de signalisation de bout en bout des données applicatives.

Selon une autre particularité, au moins un des champs suivants est utilisé pour l'étape de transmission d'informations additionnelles en sus du protocole SIP :
- En-tête des paquets SIP où sont mentionnées des caractéristiques de session ;
- Descriptif du code de réponse ;
- Call_ID ;
- Branch ;
- TAG.

Selon une autre particularité, au moins un champ associé à la méthode MESSAGE du protocole SIP est utilisé pour l'étape de transmission d'informations additionnelles en sus du protocole SIP.

Selon une autre particularité, au moins un champ associé à l'information SDP de charge utile de SIP est utilisé pour l'étape de transmission d'informations additionnelles en sus du protocole SIP, ce champ SDP dans la charge utile de SIP étant défini comme optionnel par le protocole SIP ou ayant une structure et une syntaxe qui ne sont pas fixées par le protocole SIP.

Selon une autre particularité, un champ Call_ID du protocole SIP est utilisé pour l'étape de transmission d'informations additionnelles en sus du protocole SIP.

Selon une autre particularité, des conditions de consommation/usage du contenu multimédia transmis lors de ladite étape de transmission sont modifiées par une application multimédia consommatrice du contenu multimédia sur la réception et la prise en compte des informations additionnelles véhiculées au travers du protocole SIP.

Selon une autre particularité, des conditions de consommation/usage d'un flux de transmission établi entre les deux terminaux de communication sont modifiées par des applications multimédia consommatrices et émettrices du contenu multimédia de chaque terminal sur l'émission, la réception et la prise en compte des informations additionnelles véhiculées au travers du protocole SIP.

Cette prise en compte peut être planifiée suivant un protocole partagé au préalable par les deux applications multimédia.

Selon une autre particularité, le procédé comprend une étape d'évaluation d'une bande passante disponible pour au moins un des canaux d'échanges hors session identifiés.

Selon une autre particularité, le procédé comprend une étape de renégociation en temps réel de la délivrance d'un service multimédia quand les conditions d'usage sont modifiées au travers de l'émission d'information additionnelle via le réseau SIP sous-jacent, l'étape de renégociation comprenant une détection par le second terminal de cette modification des conditions d'usage, en fonction :
- de l'évolution de l'environnement de réseaux de transport disponibles pour le second terminal (par exemple détection d'un réseau Wifi ou de réseaux de connectivité local et/ou pervasif) ;
- des conditions de localisation géographique du second terminal (à base d'information de type géolocalisation GPS ou cellule de rattachement d'un réseau mobile ou réseau de rattachement (roaming/itinérance)) ;
- des conditions de fonctionnement du second terminal lui-même, par exemple suite à la modification de l'environnement radio, de l'énergie disponible (batterie), de la disponibilité des processeurs internes du second terminal (notamment lorsque ce dernier est un terminal mobile) en fonction du nombre de tâches en cours d'exécution au sein dudit terminal ;
- des conditions d'usage et de consommation du service, par exemple paiement par tranche de durée, selon l'horaire de connexion, paiement en fonction de la résolution affichée et du rendu des couleurs, service dégradé suivant la position géographique, service nécessitant un chiffrement supplémentaire ou une authentification supplémentaire car le second terminal vient d'être localisé dans une zone non sûre.

Selon une autre particularité, l'étape de renégociation est réalisée pour modifier les conditions de délivrance du service multimédia suite à une action spécifique de l'utilisateur. Il est ainsi permis pour l'utilisateur de diminuer temporairement une consommation de bande passante, en iconifiant un flux streaming de TV/Video. Autrement dit, quand des conditions d'usage sont modifiées par exemple au niveau du second terminal, l'étape de renégociation permet de modifier la taille d'une fenêtre vidéo visible à l'écran.

Selon une autre particularité, le procédé comprend une étape de mémorisation dans une mémoire de chacun des deux terminaux d'une liste des canaux d'échange identifiés et pouvant être utilisés hors session pour transmettre des informations multimédia.

Selon une autre particularité, le protocole de signalisation est le protocole SIP et l'étape de transmission d'informations additionnelles en sus dudit protocole comprend :
- une étape d'écriture par le premier terminal d'une requête dans un format texte ;
- une étape d'encodage de la requête ;
- une étape d'envoi d'un message INVITE en passant la requête encodée dans le champ Call-ID.

Selon une autre particularité, l'étape de transmission d'informations additionnelles en sus dudit protocole comprend en outre :
- une étape d'envoi d'un message de réponse contenant une indication d'indisponibilité temporaire et dans lequel une réponse à la requête est positionnée par le second terminal dans un champ purement descriptif ou explicatif ;
- une étape de confirmation de fermeture d'une session SIP, dans laquelle le premier terminal envoie au second terminal un message d'acquittement ACK avec le même champ Call-ID pour indiquer une bonne réception de la réponse (définitive) à la requête.

Selon une autre particularité, ledit champ purement descriptif ou explicatif est le champ « Reason » (servant habituellement pour le motif du refus ou de l'acceptation d'une requête).

Un objectif supplémentaire est de proposer dans un terminal de communication en réseau une application permettant de nouvelles utilisations du protocole de signalisation en profitant au maximum des potentialités de l'infrastructure réseau supportant ce type de protocole.

A cet effet, l'invention concerne un programme d'un module de traitement directement chargeable dans la mémoire d'un terminal de communication avec un réseau pour commander des étapes du procédé selon l'invention lorsque ledit programme est exécuté sur le terminal.

L'invention, avec ses caractéristiques et avantages, ressortira plus clairement à la lecture de la description faite en référence aux dessins annexés donnés à titre d'exemples non limitatifs dans lesquels :
- la figure 1 représente un logigramme des étapes du procédé dans un mode de réalisation de l'invention ;
- la figure 2 montre un exemple d'établissement d'échanges de signalisation propres à des applications des terminaux, sans interférence avec les réseaux SIP sous-jacents ;
- la figure 3 illustre un premier scénario d'appel qui peut être détecté par utilisation d'un indicateur d'un système selon l'invention ;
- la figure 4 illustre un second scénario d'appel qui peut être détecté par utilisation d'un indicateur d'un système selon l'invention ;
- la figure 5 représente schématiquement un contexte IP Multimedia Subsystem (IMS), dans lequel un réseau d'opérateur de radiotéléphonie est doté d'un système de surveillance et gestion des requêtes SIP selon un mode de réalisation de l'invention.

### DESCRIPTION DES MODES DE REALISATION PREFERES DE L'INVENTION

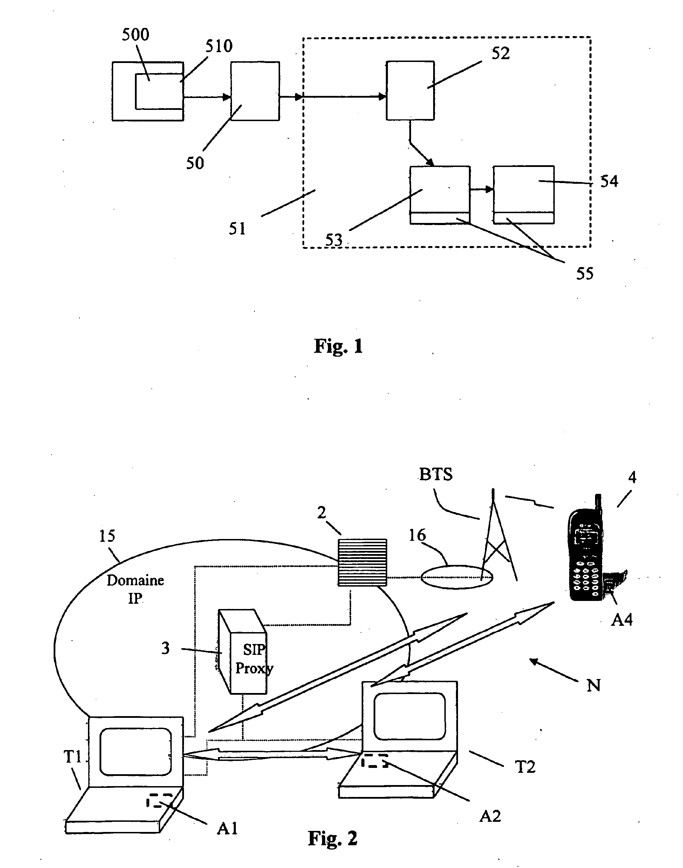

Le procédé selon l'invention vise à proposer des méthodes d'échange de signalisation à un niveau application en utilisant les spécificités du protocole SIP ou autre protocole de signalisation, mais sans jamais porter atteinte au fonctionnement intrinsèque du protocole de signalisation de façon à pouvoir bénéficier d'une infrastructure réseau au niveau mondial. Dans l'exemple de la figure 2, des échanges de signalisation propres aux applications utilisées doivent être établies entre les applications (A1, A2, A4) des terminaux (T1, T2, T4). Des informations de signalisation peuvent être échangées entre ces applications (A1, A2, A4) sans interférer avec les réseaux SIP sous-jacents. Le procédé prévoit d'identifier une pluralité de possibilités d'échange d'information dans un scénario simple de communication et à titre d'exemple non limitatif : l'usage de INVITE, réponse et ACK et BYE.

Une méthode INVITE indique que l'application (ou utilisateur) correspondant à l'adresse URL SIP spécifiée est invité à participer à une session (le corps du message décrivant cette session, par exemple : média supporté par l'appelant) ; en cas de réponse favorable, l'invité doit spécifier les médias qu'il supporte. II existe également la méthode RE-INVITE.

Le format des messages SIP reste inchangé. On rappelle ici qu'un message SIP peut être à la fois une requête d'un client (terminal appelant) vers un serveur (terminal appelé) ou bien une réponse d'un serveur vers un client. A titre d'exemple, une requête SIP d'un client vers un serveur peut se représenter comme suit :

| |
|---|
| En-tête général, ou de requête, ou d'entité |
| Ligne de requête |
| (Méthode, Requête URI, version SIP) |
| CRLF (permet de spécifier la fin du champ d'en-têtes, et le début du corps de message) |
| Corps du message |

Une requête SIP d'un serveur vers un client peut se représenter comme suit :

| |
|---|
| Ligne d'état |
| (version SIP, code d'état, Reason phrases) |
| En-tête général, ou de réponse, ou d'entité |
| CRLF (permet de spécifier la fin du champ d'en-têtes, et le début du corps de message) |
| Corps du message |

Dans le cas des requêtes, un corps (du message) est ajouté ou non selon la méthode utilisée. S'il s'agit par exemple d'une méthode INVITE, le corps du message de la requête INVITE contient des informations indiquant la progression de la requête. Dans le cas des réponses, le corps du message est obligatoire. Ainsi, la réponse à une requête INVITE contient dans le corps du message une description de la session.

L'abonné qui utilise via son terminal (T1) une infrastructure SIP est normalement connecté à celle-ci. Il a passé les phases d'authentification et s'est enregistré auprès de son serveur (3) proxy SIP. L'abonné voulant établir un service utilisant les principes du procédé selon l'invention, va lancer une application (A1) appelée client de son terminal (T1) qui va dans une première phase 'scanner' les potentialités de l'infrastructure SIP utilisée. Pour ce faire, le client embarqué de l'abonné va émettre un ensemble de requêtes vers le serveur (3) de délivrance du service ou un autre abonné (terminal T2) si le service requis et de type poste à poste « Peer to Peer » (P2P).

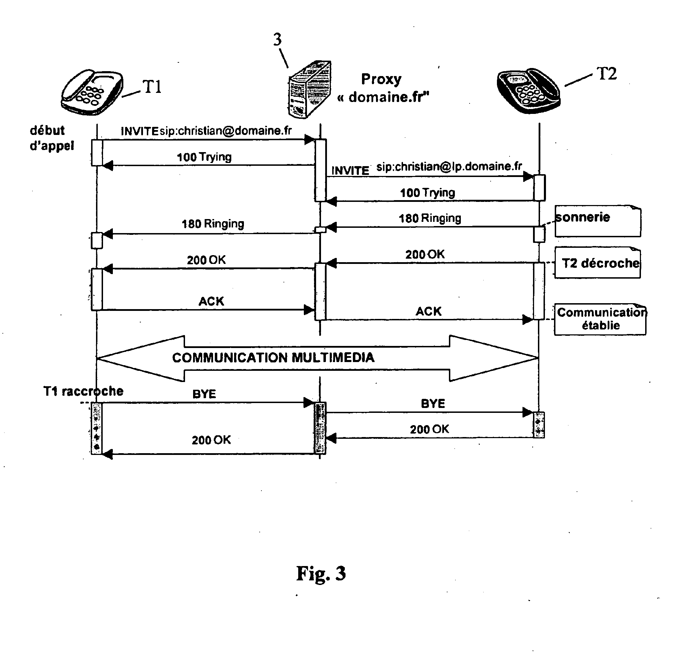

Le protocole SIP repose sur l'envoi de requêtes au format texte. Une requête utilise une méthode définie dans la RFC du protocole telle que INVITE, OPTIONS, ACK, BYE, REGISTER, CANCEL, ou MESSAGE (défini dans l'extension de la RFC). Chaque requête contient des en-têtes (généralement une dizaine mais le nombre est extensible) et éventuellement un corps de message. L'annexe 1 fournit un exemple de requêtes SIP établissant un appel téléphonique. Le processus décrit dans l'annexe 1 se rapporte à la succession d'étapes illustrées à la figure 3. Il faut remarquer que dans cet exemple, un appel est établi : il y a donc un effet sur le comportement de l'infrastructure SIP.

Les champs Call-ID, branch et tag sont choisis par le terminal émetteur (T1) et acheminés par l'infrastructure SIP jusqu'au terminal destinataire (T2). Ces champs n'ont que très peu d'exigence de format et peuvent donc être facilement utilisés pour envoyer de l'information additionnelle du terminal émetteur (T1) vers le terminal destinataire (T2). Dans un mode de réalisation de l'invention, il est prévu pour la mise en oeuvre du procédé des moyens d'utiliser cette facilité prévue par la norme. Pour cela, le terminal (T1) émetteur comprend un agent de traitement disposant de scripts qui permettent d'utiliser ces champs.

On comprend également que le second terminal (T2) destinataire peut utiliser le champ contextuel du compte rendu pour émettre une information en sus du protocole vers le premier terminal (T1). La réception du message de statut avec le champ Call_ID renseigné avec la valeur émise par le premier terminal (T1), fournit un renseignement sur le fait que la donnée véhiculée dans le champ « Call-ID » a bien été prise en compte par le second terminal (T2). De façon parallèle, le premier terminal (T1) peut renvoyer un acquittement ACK vers le second terminal (T2) pour lui signifier au travers du TAG associé au champ « from » que sa réponse a bien été prise en compte.

En référence à la figure 2, le réseau (N) SIP inclut un premier domaine (15) de protocole IP (Internet Protocol) permettant d'utiliser une topologie d'options de routage (traits en pointillés) et un deuxième domaine correspondant à un réseau de radiotéléphonie (16). Un domaine de type RTC (Réseau Téléphonique Commuté) peut également faire partie du réseau (N) SIP.

Dans un mode de réalisation préféré, le réseau (N) SIP illustré à la figure 2 utilise une architecture de service avec un sous-système IMS (IP Multimédia Subsystem), qui permet de déployer une technologie voix sur IP. Bien que le réseau (N) SIP soit représenté comme incluant un réseau de radiotéléphonie (16) doté de stations et une partie avec connexion filaire, on comprend que n'importe quelle connexion sans fil peut être utilisée dans le réseau (N), ce dernier pouvant même utiliser uniquement des connexions sans fil (radio, WiFi, Wimax, Bluetooth®, etc.).

Dans l'exemple de la figure 2, le domaine IP (15) dispose d'une pluralité d'éléments de réseau, notamment une passerelle (2) média (media gateway), un serveur (3) proxy ainsi que des premier et second terminaux d'utilisateur (T1, T2). Chaque terminal (T1, T2) peut utiliser une portion de la topologie des options de routage lors de l'établissement d'une communication avec un terminal de radiocommunication (4), par exemple cellulaire, connecté via le réseau de radiotéléphonie (16). Dans ce cas, le serveur (3) proxy et la passerelle (2) sont utilisées. Les premier et second terminaux peuvent aussi communiquer entre eux par utilisation du serveur (3) proxy SIP, sans utilisation de la passerelle (2) dans ce cas.

En référence à la figure 1, le procédé prévoit d'utiliser un canal d'échange de données, accessible via le protocole de signalisation, pour diffuser de bout en bout des informations autres que celles nécessaires à la gestion de sessions multimédia. Le procédé contrôle l'établissement de canaux d'échanges pour permettre la transmission d'informations multimédia entre des terminaux de communication (T1, T2, 4) connectés entre eux par le réseau (N) de télécommunications.

En référence aux figures 1 et 2, une étape (51) d'établissement d'une communication entre un premier terminal de communication (T1) et un second terminal de communication (T2) est réalisée par utilisation d'applications respectives (A1, A2) gérant le protocole de signalisation. Le premier terminal (T1) effectue une étape (500) de recherche de canaux d'échanges entre les deux terminaux (T1, T2). Cette étape (500) de recherche de canaux d'échanges peut ainsi permettre de répertorier les possibilités d'échanger des informations applicatives, le canal d'échange pouvant être choisi lors d'une étape ultérieure (52) de sélection. Une étape (50) d'identification par le premier terminal (T1) d'au moins un canal d'échange peut être réalisée par le premier terminal (T1), par exemple après chaque réception d'un message de réponse à une des requêtes émises lors de l'étape (500) de recherche.

Lors de la communication, le procédé peut comporter :
- une étape (53) d'émission d'une ou plusieurs requêtes par le premier terminal (T1), à destination du second terminal (T2), en ouvrant une session selon le protocole de signalisation déterminé ; et
- une étape (54) d'envoi par le second terminal (T2) d'une réponse représentative d'une indisponibilité pour clôturer la session selon le protocole de signalisation déterminé.

Dans un mode de réalisation de l'invention, le procédé comprend une étape (55) de transmission d'informations multimédia par utilisation dudit canal d'échange sélectionné. On comprend que l'utilisation de ce canal d'échange ne correspond absolument pas à la voie utilisée lors d'une session classique, dans lequel l'initiation du transfert d'une information multimédia est effectuée en utilisant le corps du message de la requête SIP. Avantageusement, l'étape (55) de transmission d'informations additionnelles via ce canal s'effectue lors desdites étapes (53, 54) d'émission et d'envoi, en sus dudit protocole de signalisation.

Cette étape (55) de transmission est réalisée par exemple après l'étape (52) de sélection du canal d'échange. Ces deux étapes (52, 55) sont par exemple chacune déclenchées à un niveau applicatif. L'étape (500) de recherche de canaux d'échanges peut comprendre une étape (510) d'envoi par le second terminal (T2) d'un ensemble de messages de réponse aux requêtes du premier terminal (T1). Ceci permet d'identifier et répertorier, au niveau de chacune des applications (A1, A2), les canaux parallèles disponibles.

Plusieurs méthodes sous-jacentes au principe d'utilisation détournée de canaux de communication vont à présent être décrites. Bien que les exemples décrits se focalisent sur le protocole SIP, il doit être compris que cela peut être étendu à d'autres protocoles de signalisation (SIP, H323, MGCP, Megaco).

### Méthode des champs non définis :

La technique proposée repose sur le fait d'échanger des données de niveau applicatif au-dessus de la signalisation en utilisant astucieusement les facilités d'encodage proposées par le protocole SIP. On se focalise sur quatre méthodes utilisables simplement pour les échanges en les combinant plus ou moins : on peut généraliser tous les cas d'usage. Il doit être compris que le procédé de contrôle n'est pas restrictif de ces quatre méthodes puisque la présente solution porte plus généralement sur le fait d'utiliser le transport de signalisation toujours présent, quelle que soit la consommation de flux de streaming en cours (cf. le descriptif des échanges entre Bob et Alice dans les annexes 1 et 2). Les quatre méthodes suivantes peuvent être citées :
- En-têtes des paquets SIP (caractéristiques des sessions) ;
- Descriptif du code de réponse (req 200 OK) ;
- Call ID (<CSeq>);
- TAG (ou BRANCH).

Ainsi, une multitude d'en-têtes proposés dans un protocole (SIP ou autre) et pouvant être inclus aux messages pour préciser un peu plus les caractéristiques de la session sont susceptibles de faire transiter de l'information dans la signalisation. De la même façon, une réponse à une requête dans un protocole donné, constituée d'un code et d'une description du code (par exemple pour SIP : 200 *OK,* 301 *Moved Permanently,* 404 *Not Found*...) permet de faire transiter de l'information dans la signalisation : réponse 200 *Bonjour* par exemple.

### Méthode incluse au sein des méthodes MESSAGE

L'application (A1) du terminal (T1) construit une requête transportée dans la méthode MESSAGE du protocole SIP, dont le format est préalablement établi avec le serveur/destinataire auquel/avec lequel il souhaite accéder/communiquer. L'agent embarqué teste alors s'il est possible de communiquer avec le serveur (3) des informations descriptives. Si le réseau (N) SIP achemine les méthodes MESSAGE, alors c'est le moyen le plus simple de transporter et d'établir une échange de données entres applications (A1, A2) entre deux utilisateurs (Bob et Alice). Le seul inconvénient des méthodes MESSAGE est la facturation possible de celle-ci, dans le cas où le réseau sous-jacent met en oeuvre des services de messagerie instantanée ; or dans notre problématique, la renégociation des conditions de qualité de la délivrance d'un contenu multimédia ne doit pas être facturable pour un acte de signalisation.

Dans un mode de réalisation de l'invention, le procédé de contrôle de l'établissement de canaux de communication permet d'échanger des informations de signalisation pour modifier en temps réel la nature des informations échangées, donc de la signalisation : il peut être dommageable de devoir utiliser un canal soumis à facturation pour établir et échanger de la signalisation relative à un service en cours de délivrance.

### Méthode s'appuyant sur l'usage du payload (charge utile de SIP) SDP du protocole SIP

Le protocole SDP (Session Description Protocol) est décrit dans le RFC 2327 [2.] et est utilisé pour décrire des sessions multicast dans les annonces ou les invitations de sessions. Ces description ne figent pas forcément la structure et la syntaxe de tous les champs et en particulier des champs optionnels. Parmi ces champs facultatifs, certains ne sont pas syntaxiquement décrits et donc utilisables suivant le bon vouloir des services développés. Ce fait est astucieusement décrit dans l'annexe 4. A titre d'exemple non limitatif, la charge utile de SIP ou payload SDP contenue dans les messages INVITE et certains 200 et ACK peut être utilisée pour transférer des données, même si aucune session n'est établie. Le champ s= de la payload SDP est par exemple un nom descriptif de la session et peut être utilisé pour transmettre des données de façon parallèle.

### Application à la Méthode Call ID dans le message INVITE

L'absence de format sur ces champs permet à l'agent/le client (A1) de générer ses propres données et de leur adjoindre une donnée unique permettant la garantie de l'unicité du champ dans sa globalité. Il est alors facile d'imaginer, au sein du champ CALL-ID, la mise en oeuvre d'une structure de type :
<id unique><commande/requête><données associées>

Cet identifiant id-unique peut être composé d'une information d'identification de l'abonné ou agent et d'une variable de valeur unique toto MSISDN@sfr.fr-donnée unique(temps), comme par exemple :
toto_03360313130202@sfr.fr-197.118.0.10_12h3047GMT

Un exemple intéressant est le suivant : lors de la diffusion d'un contenu en streaming (préalablement établi), le client (A2) du terminal (T2) recevant le flux de streaming souhaite informer le serveur (3) ou l'émetteur (T1) de la nécessité de baisser temporairement la qualité du flux pour des raisons de disponibilité de l'unité de traitement CPU au niveau du client (A2). La requête : modification de la qualité vidéo à la valeur 7 pour 5 minutes peut être codée entre AA pour le champ descriptif de l'action et PP pour le champ descriptif des paramètres AAvideoAAPP7_5PP.

Pour transférer des informations vers le serveur (3) ou le client (A2) de l'abonné distant, on peut prévoir que le champ call ID va s'écrire toto_ 03360313130202@sfr.fr-197.118.0.10_12h3047GMT_AAvideoAAPP7_5PP. L'annexe 2 illustre alors le format de la requête émise par l'application (A1) du premier terminal (T1). Le correspondant peut alors renvoyer ses réponses ou paramètres au travers du champ Descriptif du code de réponse tout en recopiant le CALL-ID. Le message « requete video 7 5 en traitement » peut donc être reçu par le premier terminal (T1). Cet exemple peut être complexifié en y intégrant des notions de délais horaires ou programmation de délais en terme de trame RTP ou séquences d'images.

Le protocole est réalisé sous la forme question / réponse ou commande / réponse. La structure suivante <id unique><commande/requête><données associées> permet d'offrir à n'importe quelle couche applicative un support (bearer) de transport. Il est ainsi très simple de reconstruire un module de transfert de fichier fonctionnant par un usage des canaux CALL-ID et descriptif du code de réponse au travers des messages INVITE. Il faut aussi remarquer que si le compte-rendu d'INVITE est négatif, aucune session ne sera établie ni construite au niveau du serveur (3) SIP. Le module de transfert de fichier peut donc émettre un message d'INVITE avec au niveau du CALL-ID la requête suivante : <toto@MSISDN@frnce@sfr.net><modifier qualité vidéo><7, 5>, c'est-à-dire modifier la qualité vidéo en sélectionnant le niveau 7, pour une durée de 5 minutes. Un exemple de réponse du serveur est illustré à la fin de l'annexe 2.

Le serveur (3) peut aussi spontanément demander à un utilisateur d'activer des moyens de sécurité plus élevés si le client se retrouve dans un environnement peu sûr au moyen d'une requête INVITE dans le présent exemple.

On remarque que le champ FROM peut aussi être utilisé pour dialoguer directement avec un serveur de service, puisqu'il est disponible pour n'importe quelle valeur d'alias. Ce champ n'étant pas contraint dans son contenu, il peut être renseigné avec n'importe qu'elle structure convenu auparavant respectant les obligations de structure de la norme. Un autre intérêt du champ FROM est que, de façon générale, le contenu de ce champ sera affiché à la réception par le terminal ; il est ainsi permis de construire des offres de services (avec interactivité) demandant des actions de l'utilisateur au moment de la réception de la demande de traitement émise, que cette demande soit relative ou non à la renégociation de la qualité de service du contenu multimédia en cours de diffusion.

En référence avec l'annexe 3, deux autres champs sont aussi intéressants dans le cadre d'une utilisation parallèle de la signalisation SIP selon l'invention des champs du protocole de signalisation : « warning champ » et reason « champ ». La lecture du descriptif de la RFC permet de voir que ces champs sont de type texte et sont obligatoires lors des échecs ou des alertes, événement particulièrement recherché pour ne pas établir de session d'échange de données entre les interlocuteurs RTP (Real Time Protocol).

Un des moyens les plus astucieux est d'établir une convention de format au niveau applicatif pour l'ensemble des champs de la norme laissés libres pour fournir une explication textuelle (humainement lisible : "the reason phrase should be human readable"). L'information est ainsi véhiculée de bout en bout par l'infrastructure SIP sans aucune modification au niveau des serveurs, gateway et proxy (2, 3) traversés. Cette information se retrouve dans les réponses SIP et les méthodes.

Il faut aussi souligner qu'il peut être évité d'émettre des requêtes aboutissant en échec pour ne pas déclencher l'établissement d'un canal data : un nouveau canal de données peut en effet être avantageusement établi et utilisé entre deux terminaux (T1, T2) ou même plus de deux terminaux (T1, T2, 4).

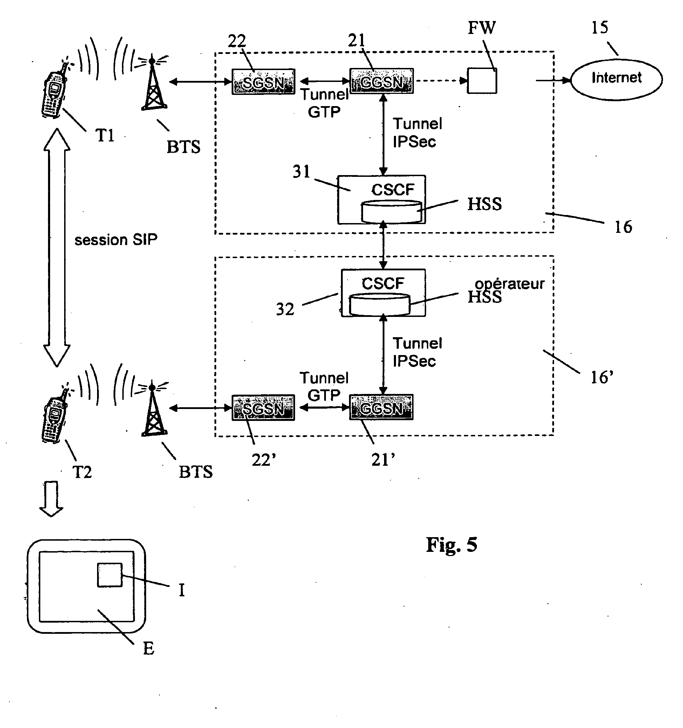

La forme de réalisation de la figure 5 montre l'infrastructure de deux opérateurs de radiotéléphonie différents avec une communication entre ces réseaux via des serveurs (31, 32) CSCF (Call Session Control Function) dotés par exemple de base de données HSS (Home Subscriber Server) pour récupérer les données d'abonnés. Des passerelles (21, 21') et des commutateurs (22, 22') prévus dans chacun de ces réseaux de radiotéléphonie (16, 16') permettent d'acheminer les messages jusqu'à des terminaux mobiles de radiocommunication (T1, T2). Un protocole GTP (GPRS Tunnel Protocol) permet de communiquer entre une passerelle (21, 21') de type GGSN (Gateway GPRS Support Node) à un commutateur (22, 22') de type SGSN (Serving GPRS Support Node). Un pare feu (FW) peut être placé à l'interface entre au moins un des réseaux (16) de radiotéléphonie et le domaine (15) de type Internet.

L'architecture IMS telle qu'illustrée à la figure 5 permet d'accéder à des services multimédia depuis des terminaux mobiles ou fixes, en utilisant le protocole SIP sur IP. Le sous-système IMS est organisé en trois couches, qui sont :
- la couche de transport qui désigne le moyen d'accès à l'IMS : GGSN pour les téléphones mobiles, DSLAM pour l'ADSL, etc. ;
- le contrôleur de session (Call/Session Control Function ou CSCF) ; cette couche comprend notamment les serveurs suivants :
   o le Proxy-CSCF qui joue le rôle de proxy SIP : tous les messages de signalisation passent par lui ; il établit un tunnel IPSec entre le GGSN et lui ;
   o le Serving-CSCF qui permet d'administrer le domaine : il joue le rôle de Registrar SIP et permet d'établir une politique de signalisation ; il assure aussi les fonctions de routages (tous les messages passent aussi par lui) ;
   o le Interrogating-CSCF est le point d'entrée d'un domaine : c'est par lui que passent les paquets SIP provenant d'un autre domaine ; son adresse est publiée dans le système DNS (Domain Name System) ;
- les serveurs d'application qui exécutent les services.

La figure 3 permet de rappeler le déroulement conventionnel d'un scénario d'appel avec un protocole de signalisation. Les scénarios simples de communication utilisent des requêtes SIP telles que : INVITE, ACK, BYE. Un terminal client SIP (T1) appelle un autre terminal (T2) en utilisant le message INVITE. Le message envoyé contient des informations permettant d'établir les flux media vers le terminal client (T1) appelant. L'exemple ci-après illustre un message d'invitation selon le protocole SIP :
INVITE sip *christian*@*domaine.fr* SIP/2.0
Via: SIP/2.0/UDP {*mon adresse privée : port* };branch={branch}
Max_forwards: 70
From: {"Christian"} <sip:{ *christian*@*domaine.fr*}>;
To: {Paul} <sip:{*paul*@*domaine.fr*}>
Call-ID: {2966324558-edc-6548-fg8g9}
CSeq: {1} INVITE
Expires: 1800
Content-Length: {187}

Un serveur SIP, par exemple le serveur (3) proxy du domaine « domaine.fr », répond à une requête SIP au moyen d'une ou plusieurs réponses. La majorité des réponses, dont les codes sont de la forme 2xx, 3xx, 4xx, 5xx, et 6xx sont des réponses « finales » et terminent la transaction courante. Les réponses de la forme 1xx sont des réponses provisoires. Un exemple de réponse est fourni ci-après :
SIP/2.0 100 Trying
Via: SIP/2.0/UDP {*mon adresse privée : port* };branch={branch}
From: {"Christian"} <sip:{ *christian*@*domaine.fr*}>;
To: {Paul}<sip:{ *paul*@*domaine.fr*}>
Call-ID: {2966324558-edc-6548-fg8g9}
CSeq: {1} INVITE

Dans l'exemple de la figure 3 :
- le code de réponse «100» signifie « Trying » en cours de traitement ;
- le code de réponse « 180 » signifie « Ringing » sonnerie en cours ; et
- le code de réponse « 200 » signifie « OK ».

Pour comprendre la notion de transactions et de retransmission de messages, il faut ici rappeler qu'un dialogue SIP est identifié par la combinaison des champs « From », « To », Call-ID et du numéro de séquence « Cseq ». Lorsque le dialogue est établi, toutes les requêtes et les réponses doivent inclure ces champs d'en-tête. Chaque transaction est identifiée par la valeur commune de l'en-tête « Cseq » (le nom de la méthode et le numéro de séquence doivent être identiques). Le système selon l'invention peut permettre d'analyser dans chaque transaction le type de requêtes émises avec les réponses associées et de comparer les transactions entre elles.

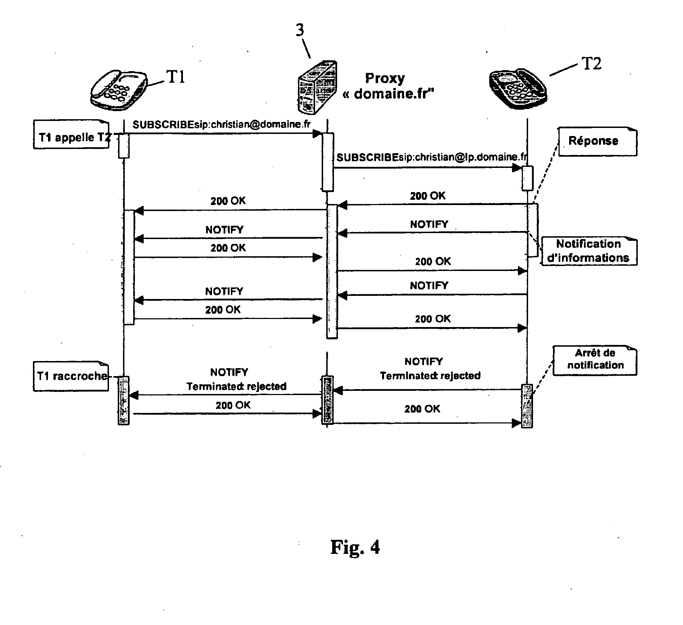

En référence à la figure 4, des requêtes génériques comme SUBSCRIBE et NOTIFY peuvent être aussi contrôlées et utilisées lors de l'étape (55) de transmission d'informations multimédia. Le fait d'utiliser les requêtes SUBSCRIBE et NOTIFY permet de diffuser de bout en bout des informations autres que celles nécessaires à la gestion de sessions multimédia. Ces deux requêtes génériques peuvent être routées par les serveurs (3) proxy à l'aide des en-têtes « From » et « To » et sont acquittées par des réponses. La requête SUBSCRIBE est envoyée par le terminal client (T1) qui souhaite recevoir certains événements vers un serveur (3) qui génère les événements (par exemple : une demande d'informations de présence à une application de type liste d'amis « buddy list »). La requête SUBSCRIBE contient dans l'en-tête « Expires » qui indique la durée de la souscription. La requête NOTIFY sert à envoyer des notifications d'événements. Ces requêtes SUBSCRIBE et NOTIFY peuvent créer un dialogue SIP, elles n'ont pas besoin de requête INVITE et elles peuvent être envoyées de manière asynchrone à n'importe quel moment.

Il est ainsi très simple de réaliser au-dessus d'une infrastructure SIP un système de communication sur la base question/réponse. Avec l'exemple du champ call-ID, si un premier terminal (T1) veut par exemple émettre vers un second terminal (T2) une requête élémentaire pour interroger une base de données, alors :
- le premier terminal (T1) écrit sa requête élémentaire au format texte ;
- il encode ensuite sa requête en base-64 ; puis
- il envoie un message INVITE au second terminal (T2) en passant la requête encodée dans le CALL-ID.

Le second terminal (T2) répond avec le code 480 (temporarily unavailable) et positionne dans le champ reason-code la réponse de la requête à une base de données. Le premier terminal (T1) renvoie alors un acquittement ACK avec le même Call-ID pour confirmer la fermeture de la session SIP et la bonne réception du résultat à la requête. L'infrastructure SIP va considérer que l'appel n'a jamais abouti et que la session est terminée, mais une requête aura été traitée au travers de l'infrastructure SIP.

On comprend qu'il est aisé de complexifier le protocole pour embarquer au niveau des champs tels que CALL-ID une succession de requêtes. L'homme de l'art appréciera qu'il suffit d'établir une convention pour identifier le premier paquet, identifier le paquet d'ordre N et le dernier paquet (voir SIP INVITE definition : RFC 2543 et RFC 3261). L'exemple de la figure 3 permet de montrer la relative simplicité du scénario de communication, par usage de INVITE / ACK et BYE.

Dans un mode de réalisation de l'invention, le procédé prévoit de scruter/scanner les canaux ouverts. La plupart des exemples précédemment cités utilisent simplement le champ Call-ID pour véhiculer les requêtes, et cela de façon bidirectionnelle grâce à la puissance du protocole SIP. Mais certaines infrastructures SIP n'acheminent pas l'information de Call-ID de bout en bout, en particulier si un serveur (3) proxy SIP réécrit ces données. Cela est possible au niveau du protocole SIP puisque la seule contrainte est que l'information constituée de TO, FROM et CALL ID doit identifier une connexion peer to peer unique.

L'usage du champ « from » comme activateur d'échange peut alors être nécessaire. Dans le cas où les champs « from » se retrouveraient aussi bridés par le serveur (3) proxy SIP du fait des limitations de ses capacités, des schémas s'appuyant sur l'usage du champ TO peuvent être envisagés.

Dans le cadre de l'usage du champ FROM, la requête est encodée dans celui-ci et le schéma montré avec le call-ID reste identique (cf. annexes 1-2). Dans le cadre du champ TO, le terminal récepteur (T2) utilisé par Bob fait une requête vers le terminal (T1) d'Alice mais en ciblant un alias (pseudo) spécifique d'Alice lui demandant de rappeler pour permettre de passer la requête. Alice rappelle donc et en retour le terminal (T2) de Bob transporte sa requête dans un des champs contextuels offerts : la réponse reviendra au niveau de l'acquittement ACK ou si cette méthode n'est pas disponible dans le réseau il peut être convenu au niveau du rejet de la requête que, moyennant un identifiant de requête, bob rappelle Alice afin de lui transmettre son identifiant de requête et que celle-ci lui réponde au moment du rejet.

Plusieurs méthodes sont donc possible pour tirer astucieusement parti de la puissance du protocole SIP, mais il est nécessaire de convenir laquelle de ces méthodes on souhaite utiliser et en particulier de détecter laquelle peut être utilisée sur un réseau (N) SIP et cela de façon automatique. Le principe de fonctionnement du scan (scrutation) repose sur une utilisation d'un ensemble de méthodes, de façon séquentielle, jusqu'à ce que l'on détecte une méthode opérationnelle sur cette infrastructure.

Lors de la phase de découverte des canaux parallèles disponibles, l'agent/le client embarqué émet une requête INVITE vers le destinataire en renseignant les champs disponibles successivement et peut ainsi établir une cartographie des moyens de communication parallèle disponible pour atteindre le correspondant. Par extension, l'agent peut établir une cartographie des moyens de communications parallèles disponibles pour atteindre N correspondants ou serveurs, par extension des notions de groupes de destinataires peuvent aussi être gérés toujours par rapport aux moyens de communication parallèles cartographiés.

La description des tests nécessaires à la découverte des moyens de communications parallèles peut être précodée séquentiellement. Une grammaire peut décrire la liste des champs du protocole de signalisation que l'application (A1, A2) ou agent pourrait utiliser et évaluer. Une fois la cartographie réalisée, il est envisageable d'évaluer la bande passante disponible pour chacun des canaux parallèles par une succession de tests récurrents de disponibilité des canaux parallèles cartographiés.

Plusieurs options sont possibles, le client (A1, A2) se maintient à la première méthode opérationnelle. Il teste toutes les méthodes connues et choisit celle de son choix sur des critères aléatoires, ordinaux, ou dépendant de la nature des informations qu'il souhaite échanger avec son interlocuteur. Le client (A1, A2) utilise plusieurs méthodes en parallèle, si l'infrastructure SIP autorise plusieurs de ces méthodes et peut dédier/particulariser chaque méthode à des sous-types de services bien précis.

Il est bien entendu que les clients (A1, A2) dans le cadre de service en peer to peer entre 2 ou N usagers, ou le serveur (3) et le client (A1, A2) dans le premier cas ont convenu préalablement d'une convention protocolaire et de structure des informations qui sont échangés de façon à rester intelligibles. L'avantage résultant est d'utiliser l'infrastructure SIP de manière optimale pour établir un échange de données multimédia via RTP. On ne cesse pas d'utiliser l'infrastructure SIP et on parvient en outre à modifier la nature ou la qualité ou même le service échangé via la liaison de donnée RTP déjà établie, sans chercher à rompre celle-ci pour en rétablir une autre. Il est ainsi possible de forcer une réduction de qualité dans la délivrance du contenu si le client et le serveurs ou les clients des usagers en peer to peer détecte une altération de la bande passante disponible au niveau de leur contrôle (monitoring) des transferts/échanges. Ce type de modification est aujourd'hui très difficile à mettre en oeuvre et nécessite la plupart du temps de rompre la session établie pour en reconstruire une autre.

Afin de diminuer la consommation de bande passante, le terminal (T2) récepteur peut par exemple iconifier, ou réduire la taille d'affichage de la vidéo en réduisant d'autant la bande passante nécessaire (donc réduction du flux streaming de TV/Video). Dans l'exemple de la figure 5, une fenêtre réduite (I) est ainsi utilisée pour la visualisation du contenu multimédia (images/vidéo) reçu. Cette fenêtre (1) a un format bien inférieur à celui de l'écran (E) du terminal (T2) récepteur et le contenu peut être visualisé avec une moindre définition, ce qui permet d'économiser la bande passante. A titre d'exemple, la consommation de bande passante peut être volontairement réduite pendant certaines phases de la diffusion d'une bande annonce, au moment du générique par exemple. Les conditions d'utilisation en réception du contenu multimédia peuvent être prises en compte pour ajuster automatiquement la consommation de bande passante.

Un des avantages de l'invention est de permettre une maîtrise de nouveaux protocoles utilisés notamment dans la gestion des services multimédia tels que la visiophonie, la voix sur IP, échange de fichiers, la messagerie, etc. En particulier, le procédé selon l'invention peut permettre de contrôler l'usage des canaux parallèles dans les protocoles de voix sur IP et de mettre en place des canaux de communication en temps réel offrant la possibilité aux usagers de modifier la qualité du service consommé, le niveau du service et le type du service par une la mise en place d'une signalisation souple, indépendante du support (bearer) d'accès. En outre, une couche applicative de service peut être avantageusement prévue pour offrir aux applications des moyens de communications avec les centres serveurs indépendamment des politiques de filtrage et des capacités fonctionnelles des serveurs de signalisation sous-jacents.

Le procédé selon l'invention est applicable à de nombreux services, comme par exemple les services de push de messagerie, les services d'interactivité dans la consommation des nouveaux média (par exemple, la télévision interactive, ou les échanges de type Peer to Peer au sein des communautés), les services de négociation en temps réel de la qualité de service.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes et l'invention ne doit pas être limitée aux détails donnés ci-dessus.

### ANNEXE 1

INVITE sip:bob@fr.sfr.com SIP/2.0
Via: SIP/2.0/UDP 197.118.0.10:5060;branch=z9hG4bK894348304
From: <sip:alice@fr.sfr.com>;tag=EX4EvRd7LY
To: <sip:bob@fr.sfr.com>
CSeq: 1 INVITE
Call-ID: uutnq5001qwJiG@197.118.0.10
Max-Forwards: 70
user-agent: X-lite
Content-Type: application/sdp
Content-Length: 370

SIP/2.0 180 Ringing
From: <sip:alice@fr.sfr.com>;tag=EX4EvRd7LY
To: <sip:bob@fr.sfr.com>
CSeq: 1 INVITE
Call-ID: uutnq5001qwJiG@197.118.0.10
Max-Forwards: 70
user-agent: X-lite
Content-Type: application/sdp
Content-Length: 370

SIP/2.0 200 OK
From: <sip:alice@fr.sfr.com>;tag=EX4EvRd7LY
To: <sip:bob@fr.sfr.com>
CSeq: 1 INVITE
Call-ID: uutnq5001qwJiG@197.118.0.10
Max-Forwards: 70
user-agent: X-lite
Content-Type: application/sdp
Content-Length: 370

ACK sip:bob@fr.sfr.com SIP/2.0
Via: SIP/2.0/UDP 197.118.0.10:5060;branch=z9hG4bK894348304
From: <sip:alice@fr.sfr.com>;tag=EX4EvRd7LY
To: <sip:bob@fr.sfr.com>;tag=XFXF445Rd7
CSeq: 1 INVITE
Call-ID: uutnq5001qwJiG@197.118.0.10
Max-Forwards: 70
user-agent: X-lite
Content-Type: application/sdp
Content-Length: 370

### ANNEXE 2

Pour transférer des informations vers le serveur ou l'agent de l'abonné distant
Le call ID :
toto_03360313130202@sfr.fr-
197.118.0.10_12h3047GMT_AAvideoAAPP7_5PP
INVITE sip:bob@fr.sfr.com SIP/2.0
Via: SIP/2.0/UDP 197.118.0.10:5060;branch=z9hG4bK894348304
From: <sip:alice@fr.sfr.com>;tag=EX4EvRd7LY
To: <sip:bob@fr.sfr.com>
CSeq: 1 INVITE
Call-ID: toto_ 03360313130202@sfr.fr-
197.118.0.10_12h3047GMT_AAvideoAAPP7_5PP
Max-Forwards: 70
user-agent: X-lite
Content-Type: application/sdp
Content-Length: 370

Pour renvoyer des réponses ou paramètres au travers du champ Descriptif du code de réponse, tout en recopiant le CALL-ID
SIP/2.0 180 **requete video 7 5 en traitement**
From: <sip:alice@fr.sfr.com>;tag=EX4EvRd7LY
To: <sip:bob@fr.sfr.com>
CSeq: 1 INVITE
Call-ID: toto_ 03360313130202@sfr.fr-
197.118.0.10_12h3047GMT_AAvideoAAPP7_5PP
Max-Forwards: 70
user-agent: X-lite
Content-Type: application/sdp
Content-Length: 370

Réponse du serveur
CALL ID : <toto@MSISDN@frnce@sfr.net><modifier qualité vidéo><7, 5>
400 KO <acquittement de la requête : qualité vidéo modifié de 14 à 7>
SIP/2.0 400 **requete video 7 5 prise en compte**
From: <sip:alice@fr.sfr.com>;tag=EX4EvRd7LY
To: <sip:bob@fr.sfr.com>
CSeq: 1 INVITE
Call-ID: toto_ 03360313130202@sfr.fr-
197.118.0.10_12h3047GMT_AAvideoAAPP7_5PP
Max-Forwards: 70
user-agent: X-lite
Content-Type: application/sdp
Content-Length: 370

### ANNEXE 3

Etablissement d'un nouveau canal de données (cf. champs de la norme laissés libres)
Waning method
Warning: 307 isi.edu "Session parameter 'foo' not understood"
Warning: 301 isi.edu "Incompatible network address type 'E.164'"
Reason method
The Reason header field MAY appear in any request within a dialog, in any CANCEL request and in any response whose status code explicitly allows the presence of this header field. The syntax of the header field follows the standard SIP parameter syntax.
- Reason: = "Reason" HCOLON reason-value *(COMMA reason-value)
- reason-value: = protocol *(SEMI reason-params)
- protocol: = "SIP" / "Q.850" / token
- reason-params: = protocol-cause / reason-text / reason-extension
- protocol-cause: = « cause » EQUAL cause
- cause: = 1*DIGIT
- reason-text: = "text" EQUAL quoted-string
- reason-extension: = generic-param Reason: SIP ;cause=580 ;text="Precondition Failure"

### ANNEXE 4

Description d'une session avec SDP
v= (protocol version)
o= (owner/creator and session identifier) username session id version network type address type address
s= (session name)
*i*=* *(session information)*
*u*=* *(URI of description : link to more information)*
*e*=* *(email address of the person responsible of the session* -> *e*=*mjh*@*isi.edu (Mark Handley) or e=Mark Handley mjh*@*isi.edu)*
*p*=* *(phone number* -> *p*=+*44-171-380-7777 or p*=+*1 617 253 6011)*
*c*=* *(connection information - not required if included in all media) c*=*network type address type connection address*/*TTL*
*b*=* *(bandwidth information) b*=*modifier:bandwidth-value*
*One or more time descriptions (voir plus bas)*
*z*=* *(time zone adjustments) z*=*adjustment time offset adjustment time offset* .... *eg z*=*2882844526 -1h* 2898848070 0
*k*=* *(encryption key) k*=*method[:encryption key]*
*a*=* *(zero or more session attribute lines) a=attribute[:value]*
Zero or more media descriptions (voir plus bas)
Time description
t= (time the session is active) t=start time stop time valeurs données selon le format du protocole NTP
*r=* (zero or more repeat times) r=repeat interval active duration list of offsets from start-time*
Media description
m= (media name and transport address) m=media port[/number of ports] transport fmt list (les ports sont succesifs)
*i*=* *(media title)*
*c*=* *(connection information - optional if included at session-level)*
*b*=* *(bandwidth information)*
*k*=* *(encryption key)*
Les attribut notés *en italique* sont facultatifs. Les informations décrites par SDP seront différentes selon le type de trame SAP (service advertising protocol). Parmi ces champs facultatifs, certains ne sont pas syntaxiquement décrits et donc utilisables suivant le bon vouloir des services développés.

## Revendications

1. Procédé de contrôle de l'établissement de canaux d'échanges pour permettre une transmission d'informations multimédia entre au moins deux terminaux de communication (T1, T2, 4) connectés entre eux par un réseau (N) de télécommunications, comprenant une étape (51) d'établissement d'une communication entre un premier terminal de communication (T1) et un second terminal de communication (T2) par utilisation d'applications respectives gérant un protocole de signalisation déterminé permettant d'initier des sessions, le premier terminal (T1) effectuant une étape (52) de sélection d'au moins un canal d'échange de données entre les deux terminaux (T1, T2), l'étape (52) de sélection s'effectue à un niveau applicatif et l'étape (51) d'établissement d'une communication comprend les étapes suivantes :
- une étape (53) d'émission d'au moins une requête par le premier terminal (T1), à destination du second terminal (T2), en ouvrant une session selon le protocole de signalisation déterminé ; et le procédé étant **caractérisé par**
- une étape (54) d'envoi par le second terminal (T2) d'une réponse représentative d'une indisponibilité pour clôturer la session selon le protocole de signalisation déterminé ;
le procédé comprenant lors des étapes (53, 54) d'émission et d'envoi une étape (55) de transmission d'informations additionnelles en sus dudit protocole de signalisation, par utilisation dudit canal d'échange de données sélectionné, ce canal d'échange de données étant accessible via un champ purement descriptif/explicatif de caractéristiques d'une session, lesdites informations additionnelles correspondant à des informations applicatives non nécessaires à la gestion de sessions multimédia.

2. Procédé selon la revendication 1, comprenant une étape (50) d'identification par le premier terminal (T1) d'au moins un canal d'échange de données susceptible d'être utilisé pour l'étape (55) de transmission d'informations additionnelles, l'identification résultant d'une étape (500) de recherche de canaux d'échanges, dans laquelle le premier terminal (T1) analyse au moins une réponse du second terminal (T2) à une requête dans laquelle un des champs purement descriptifs a été renseigné avec des informations additionnelles en sus dudit protocole de signalisation.

3. Procédé selon la revendication 2, dans lequel l'étape (500) de recherche de canaux d'échanges comprend une étape (510) d'envoi par le second terminal (T2) d'un ensemble de messages de réponse à des requêtes du premier terminal (T1).

4. Procédé selon une des revendications 1 à 3, dans lequel le canal d'échange de données sélectionné est utilisé pour diffuser de bout en bout des informations multimédia.

5. Procédé selon une des revendications 1 à 4, dans lequel l'étape (52) de sélection comprend une sélection de plusieurs canaux d'échange de données pour utiliser plusieurs méthodes de transmission d'informations additionnelles en parallèle.

6. Procédé selon une des revendications 1 à 5, comprenant une étape de négociation de moyens de communication en temps réel entre un client (A1) du premier terminal (T1) et un serveur (3) au travers d'une infrastructure de communication ayant une capacité d'acheminer au travers d'informations et de messages de signalisation de bout en bout des données applicatives.

7. Procédé selon une des revendications 1 à 6, dans lequel au moins un des champs suivants est utilisé pour l'étape (55) de transmission d'informations additionnelles en sus du protocole SIP :
- En-tête des paquets SIP où sont mentionnées des caractéristiques de session ;
- Descriptif du code de réponse ;
- Call_ID ;
- Branch ;
- TAG.

8. Procédé selon une des revendications 1 à 7, dans lequel au moins un champ associé à la méthode MESSAGE du protocole SIP est utilisé pour l'étape (55) de transmission d'informations additionnelles en sus du protocole SIP.

9. Procédé selon une des revendications 1 à 8, dans lequel au moins un champ associé à l'information SDP de charge utile de SIP est utilisé pour l'étape (55) de transmission d'informations additionnelles en sus du protocole SIP, ce champ SDP dans la charge utile de SIP étant défini comme optionnel par le protocole SIP ou ayant une structure et une syntaxe qui ne sont pas fixées par le protocole SIP.

10. Procédé selon une des revendications 1 à 9, dans lequel un champ Call_ID du protocole SIP est utilisé pour l'étape (55) de transmission d'informations additionnelles en sus du protocole SIP.

11. Procédé selon une des revendications 1 à 10, dans lequel des conditions de consommation/usage du contenu multimédia transmis lors de ladite étape (55) de transmission sont modifiées par une application multimédia consommatrice du contenu multimédia sur la réception et la prise en compte des informations additionnelles véhiculées au travers du protocole SIP.

12. Procédé selon la revendication 11, dans lequel lesdites conditions de consommation/usage du contenu multimédia transmis lors de ladite étape (55) de transmission sont modifiées selon l'évolution de l'environnement de réseaux de transport disponibles pour le second terminal (T2).

13. Procédé selon la revendication 11 ou 12, dans lequel lesdites conditions de consommation/usage du contenu multimédia transmis lors de ladite étape (55) de transmission sont modifiées selon l'évolution des conditions de localisation géographique du second terminal (T2).

14. Procédé selon une des revendications 11 à 13, dans lequel lesdites conditions de consommation/usage du contenu multimédia transmis lors de ladite étape (55) de transmission sont modifiées selon l'évolution des conditions de fonctionnement intrinsèque du second terminal (T2).

15. Procédé selon une des revendications 11 à 14, dans lequel lesdites conditions de consommation/usage du contenu multimédia transmis lors de ladite étape (55) de transmission sont modifiées selon l'évolution des conditions de délivrance d'un service reçu par le second terminal (T2).

16. Procédé selon une des revendications 1 à 15, dans lequel des conditions de consommation/usage d'un flux de transmission établi entre les deux terminaux de communication (1, 2) sont modifiées par des applications multimédia consommatrices et émettrices du contenu multimédia de chaque terminal sur l'émission, la réception et la prise en compte des informations additionnelles véhiculées au travers du protocole SIP.

17. Procédé selon une des revendications 1 à 16, comprenant une étape d'évaluation d'une bande passante disponible pour au moins un des canaux d'échanges hors session identifiés.

18. Procédé selon une des revendications 1 à 17, comprenant une étape de renégociation en temps réel d'un service quand des conditions d'usage sont modifiées au niveau du second terminal (T2), l'étape de renégociation étant réalisée pour diminuer une consommation de bande passante, en modifiant la taille d'une fenêtre vidéo visible à l'écran.

19. Procédé selon une des revendications 1 à 18, comprenant une étape de mémorisation dans une mémoire de chacun des deux terminaux (T1, T2) d'une liste des canaux d'échange identifiés et pouvant être utilisés hors session pour transmettre des informations multimédia.

20. Procédé selon une des revendications 1 à 19, dans lequel le protocole de signalisation est le protocole SIP et l'étape (55) de transmission d'infiormations additionnelles en sus dudit protocole comprend :
- une étape d'écriture par le premier terminal (T1) d'une requête dans un format texte ;
- une étape d'encodage de la requête :
- une étape d'envoi d'un message INVITE en passant la requête encodée dans le champ Call-ID.

21. Procédé selon la revendication 20, dans lequel l'étape (55) de transmission d'informations additionnelles en sus dudit protocole comprend en outre:
- une étape d'envoi d'un message de réponse contenant une indication d'indisponibilité temporaire et dans lequel une réponse à la requête est positionnée par le second terminal (T2) dans un champ purement descriptif ou explicatif ;
- une étape de confirmation de fermeture d'une session SIP, dans laquelle le premier terminal (T1) envoie au second terminal (T2) un message d'acquittement ACK avec le même champ Call-ID pour indiquer une bonne réception de la réponse à la requête.

22. Procédé selon la revendication 21, dans lequel ledit champ purement descriptif ou explicatif est le champ « Reason ».

23. Programme d'un module de traitement directement chargeable dans la mémoire d'un terminal (T1, T2, 4) de communication avec un réseau (N) pour commander les étapes de la revendication 1, 2, 3, 4 ou 5 lorsque ledit programme est exécuté sur le terminal (T1, T2, 4).

## Claims

1. Method of controlling the establishment of exchange channels in order to enable transmission of multimedia information between at least two communication terminals (T1, T2, 4) connected to one another by a telecommunication network (N), comprising a step (51) of establishing communication between a first communication terminal (T1) and a second communication terminal (T2) by the use of respective applications which manage a specific signalling protocol enabling initiation of sessions, the first terminal (T1) carrying out a step (52) of selection of at least one channel for data exchange between the two terminals (T1, T2), wherein the selection step (52) is carried out at an application level and the step (51) of establishment of communication comprises the following steps:
- a step (53) of transmission of at least one request by the first terminal (T1) to the second terminal (T2) by opening of a session according to the specified signalling protocol; and the method being **characterised by**
- a step (54) of transmission by the second terminal (T2) of a response representing unavailability for closure of the session according to the specified signalling protocol;
the method comprising during the transmission steps (53, 54) a step (55) of transmission of additional information in addition to the said signalling protocol, by use of the said selected data exchange channel, this data exchange channel being accessible via a purely descriptive/explanatory field of characteristics of a session, the said additional information corresponding to application information not necessary for the management of multimedia sessions.

2. Method as claimed in Claim 1, comprising a step (50) of identification by the first terminal (T1) at least one data exchange channel capable of being used for the step (55) of transmission of additional information, the identification resulting from a step (500) of seeking exchange channels in which the first terminal (T1) analyses at least one response from the second terminal (T2) to a request in which one of the purely descriptive fields was filled with further information in addition to the said signalling protocol.

3. Method as claimed in Claim 2, wherein the step (500) of seeking exchange channels comprises a step (510) of transmission by the second terminal (T2) of a set of messages in response to requests from the first terminal (T1).

4. Method as claimed in any one of Claims 1 to 3, wherein the selected data exchange channel is used for end-to-end broadcasting of multimedia information.

5. Method as claimed in any one of Claims 1 to 4, wherein the selection step (52) comprises selection of a plurality of data exchange channels in order to use a plurality of methods of transmission of additional information in parallel.

6. Method as claimed in any one of Claims 1 to 5, comprising a step of negotiation of real-time communication means between a client (A1) of the first terminal (T1) and a server (3) through a communication infrastructure having a capacity of forwarding application data end-to-end through signalling information and messages.

7. Method as claimed in any one of Claims 1 to 6, wherein at least one of the following fields is used for the step (55) of transmission of further information in addition to the SIP protocol:
- Header of the SIP packets where session characteristics are mentioned;
- Description of the response code;
- Call_ID;
- Branch;
- TAG.

8. Method as claimed in any one of Claims 1 to 7, wherein at least one field associated with the MESSAGE method of the SIP protocol is used for the step (55) of transmission of further information in addition to the SIP protocol.

9. Method as claimed in any one of Claims 1 to 8, wherein at least one field associated with the SDP information of SIP payload is used for the step (55) of transmission of further information in addition to the SIP protocol, this SDP field in the SIP payload being defined as optional by the SIP protocol or having a structure and syntax which are not fixed by the SIP protocol.

10. Method as claimed in any one of Claims 1 to 9, wherein a Call_ID field of the SIP protocol is used for the step (55) of transmission of further information in addition to the SIP protocol.

11. Method as claimed in any one of Claims 1 to 10, wherein conditions for consumption/use of the multimedia contents transmitted during the said transmission step (55) are modified by a multimedia application which is a consumer of the multimedia contents when the additional information conveyed through the SIP protocol is received and taken into account

12. Method as claimed in Claim 11, wherein the said conditions for consumption/use of the multimedia contents transmitted during the said transmission step (55) are modified according to the evolution of the environment of available transport networks for the second terminal (T2).

13. Method as claimed in Claim 11 or Claim 12, wherein the said conditions of consumption/use of the multimedia content transmitted during the said transmission step (55) are modified according to the evolution of the geographic localisation conditions of the second terminal (T2).

14. Method as claimed in Claims 11 to 13, wherein the said conditions of consumption/use of the multimedia content transmitted during the said transmission step (55) are modified according to the evolution of the intrinsic operating conditions of the second terminal (T2).

15. Method as claimed in any one of Claims 11 to 14, wherein the said conditions of consumption/use of the multimedia content transmitted during the said transmission step (55) are modified according to the evolution of the conditions for delivery of a service received by the second terminal (T2.

16. Method as claimed in any one of Claims 1 to 15, wherein conditions of consumption/use of a transmission flux established between the two communication terminals (1, 2) are modified by multimedia applications which consume and transmit the multimedia content of each terminal when the additional information conveyed through the SIP protocol are transmitted, received and taken into account.

17. Method as claimed in any one of Claims to 16, comprising a step of evaluation of an available bandwidth for at least one of the identified out of session exchange channels.

18. Method as claimed in any one of Claims 1 to 17, comprising a step of renegotiation in real time of a service when conditions of use are modified at the second terminal (T2), the renegotiation step being performed in order to reduce consumption of bandwidth while modifying the size of a video window which is visible on the screen.

19. Method as claimed in any one of Claims 1 to 16, comprising a step of storage in a memory of each of the two terminals (T1, T2) of a list of identified exchange channels and capable of being used out of session in order to transmit multimedia information.

20. Method as claimed in any one of Claims 1 to 19, wherein the signalling protocol is the SIP protocol and the step (55) of transmission of further information in addition to the said protocol comprises:
- a step of writing by the first terminal (T1) a request in text format;
- a step of encoding of the request;
- a step of transmission of an INVITE message while passing the encoded request in the Call-ID field.

21. Method as claimed in Claim 20, wherein the step (55) of transmission of further information in addition to the said protocol further comprises:
- a step of transmission of a response message which contains an indication of temporary unavailability and in which a response to the request is positioned by the second terminal (T2) in a purely descriptive or explanatory field;
- a step or confirming the closing of an SIP session, wherein the first terminal (T1) transmits to the second terminal (T2) an acknowledgement message ACK with the same Call-ID field in order to indicate good reception of the response to the request.

22. Method as claimed in Claim 21, wherein the said purely descriptive or explanatory field is the "Reason" field.

23. Program of a processing module which is directly loadable into the memory of a communication terminal (T1, T2, 4) with a network (N) for controlling the steps according to Claims 1, 2, 3, 4 or 5 when the said program is executed on the terminal (T1, T2, 4).

## Patentansprüche

1. Verfahren zum Steuern des Erstellens von Austauschkanälen zum Ermöglichen einer Übertragung von Multimedia-Informationen zwischen mindestens zwei Kommunikationsendgeräten (T1, T2, 4), die über ein Telekommunikationsnetz (N) miteinander verbunden sind, aufweisend einen Schritt (51) des Herstellens einer Verbindung zwischen einem ersten Kommunikationsendgerät (T1) und einem zweiten Kommunikationsendgerät (T2) mittels der Verwendung jeweiliger Anwendungen, die ein bestimmtes Signalisierungsprotokoll verwalten, welches das Initiieren von Sitzungen ermöglicht, wobei das erste Endgerät (T1) einen Schritt (52) des Auswählens von mindestens einem Kanal zum Austausch von Daten zwischen den beiden Endgeräten (T1, T2) durchführt, wobei der Schritt (52) des Auswählens auf einer Anwendungsebene erfolgt, und wobei der Schritt (51) des Herstellens einer Verbindung die folgenden Schritte aufweist:
- einen Schritt (53) des Übertragens mindestens einer Anfrage durch das erste Endgerät (T1) an das zweite Endgerät (T2), wobei gemäß dem bestimmten Signalisierungsprotokoll eine Sitzung eröffnet wird, und wobei das Verfahren **gekennzeichnet ist durch**:
- einen Schritt (54) des Versendens einer Antwort durch das zweite Endgerät (T2), die eine Nichtverfügbarkeit repräsentiert, zum Beenden der Sitzung gemäß dem bestimmten Signalisierungsprotokoll,
wobei das Verfahren während der Schritte (53, 54) des Übertragens und Versendens einen Schritt (55) des Übertragens von zusätzlichen Informationen zusätzlich zu dem Signalisierungsprotokoll mittels Nutzung des ausgewählten Daten-Austauschkanals aufweist, wobei auf den Daten-Austauschkanal über ein Feld zugegriffen werden kann, das rein beschreibend/erläuternd in Bezug auf die Eigenschaften einer Sitzung ist, wobei die zusätzlichen Informationen Anwendungsinformationen entsprechen, die für die Verwaltung von Multimedia-Sitzungen nicht erforderlich sind.

2. Verfahren gemäß Anspruch 1, aufweisend einen Schritt (50) des Identifizierens mindestens eines Daten-Austauschkanals durch das erste Endgerät (T1), der zur Verwendung für den Schritt (55) des Übertragens von zusätzlichen Informationen geeignet ist, wobei sich die Identifizierung aus einem Schritt (500) des Suchens von Austauschkanälen ergibt, wobei das erste Endgerät (T1) mindestens eine Antwort des zweiten Endgerätes (T2) auf eine Anfrage analysiert, bei der eines der rein beschreibenden Felder mit zusätzlichen Informationen zusätzlich zu dem Signalisierungsprotokoll versehen wurde.

3. Verfahren gemäß Anspruch 2, wobei der Schritt (500) des Suchens von Austauschkanälen einen Schritt (510) des Versendens eines Satzes von Antwortnachrichten auf Anfragen des ersten Endgerätes (T1) durch das zweite Endgerät (T2) aufweist.

4. Verfahren gemäß einem der Ansprüche 1 bis 3, wobei der ausgewählte Daten-Austauschkanal zum Ende-zu-Ende-Rundsenden der Multimedia-Informationen genutzt wird.

5. Verfahren gemäß einem der Ansprüche 1 bis 4, wobei der Schritt (52) des Auswählens ein Auswählen von mehreren Daten-Austauschkanälen zum parallelen Verwenden von mehreren Verfahren zur Übertragung von zusätzlichen Informationen aufweist.

6. Verfahren gemäß einem der Ansprüche 1 bis 5, aufweisend einen Schritt des Aushandelns von Kommunikationsmitteln in Echtzeit zwischen einem Client (A1) des ersten Endgerätes (T1) und einem Server (3) über eine Kommunikationsinfrastruktur mit einer Fähigkeit zum Ende-zu-Ende-Weiterleiten der Anwendungsdaten durch Informationen und Signalisierungsnachrichten.

7. Verfahren gemäß einem der Ansprüche 1 bis 6, wobei mindestens eines der folgenden Felder für den Schritt (55) des Übertragens von zusätzlichen Informationen zusätzlich zu dem SIP-Protokoll [SIP, engl. Session Initiation Protocol, Sitzungs-Initiierungsprotokoll] verwendet wird:
- Kopf der SIP-Pakete, in dem die Sitzungseigenschaften angegeben sind,
- Beschreibung des Antwort-Codes,
- Call_ID,
- Branch,
- TAG.

8. Verfahren gemäß einem der Ansprüche 1 bis 7, wobei mindestens ein mit der MESSAGE-Methode des SIP-Protokolls verknüpftes Feld für den Schritt (55) des Übertragens von zusätzlichen Informationen zusätzlich zu dem SIP-Protokoll verwendet wird.

9. Verfahren gemäß einem der Ansprüche 1 bis 8, wobei mindestens ein mit der SDP-Information [SDP, engl. Session Description Protocol, Sitzungs-Beschreibungs-Protokoll] einer SIP-Nutzinformation verknüpftes Feld für den Schritt (55) des Übertragens von zusätzlichen Informationen zusätzlich zu dem SIP-Protokoll verwendet wird, wobei das SDP-Feld in der SIP-Nutzinformation durch das SIP-Protokoll als optional definiert ist oder eine Struktur und eine Syntax aufweist, die nicht durch das SIP-Protokoll festgelegt sind.

10. Verfahren gemäß einem der Ansprüche 1 bis 9, wobei ein Call-ID-Feld des SIP-Protokolls für den Schritt (55) des Übertragens von zusätzlichen Informationen zusätzlich zu dem SIP-Protokoll verwendet wird.

11. Verfahren gemäß einem der Ansprüche 1 bis 10, wobei Bedingungen für den Verbrauch/die Nutzung des bei dem Übertragungsschritt (55) übertragenen Multimedia-Inhaltes durch eine Multimedia-Anwendung modifiziert werden, die den Multimedia-Inhalt beim Empfangen und Berücksichtigen der zusätzlichen über das SIP-Protokoll übertragenen Informationen verbraucht.

12. Verfahren gemäß Anspruch 11, wobei die Bedingungen für den Verbrauch/die Nutzung des bei dem Übertragungsschritt (55) übertragenen Multimedia-Inhaltes gemäß der Entwicklung der Umgebung von Transportnetzen modifiziert werden, die für das zweite Endgerät (T2) verfügbar sind.

13. Verfahren gemäß Anspruch 11 oder 12, wobei die Bedingungen für den Verbrauch/die Nutzung des bei dem Übertragungsschritt (55) übertragenen Multimedia-Inhaltes gemäß der Entwicklung der Bedingungen der geographischen Lokalisierung des zweiten Endgerätes (T2) modifiziert werden.

14. Verfahren gemäß einem der Ansprüche 11 bis 13, wobei die Bedingungen für den Verbrauch/die Nutzung des bei dem Übertragungsschritt (55) übertragenen Multimedia-Inhaltes gemäß der Entwicklung der Bedingungen der intrinsischen Funktion des zweiten Endgerätes (T2) modifiziert werden.

15. Verfahren gemäß einem der Ansprüche 11 bis 14, wobei die Bedingungen für den Verbrauch/die Nutzung des bei dem Übertragungsschritt (55) übertragenen Multimedia-Inhaltes gemäß der Entwicklung der Bedingungen für die Bereitstellung eines von dem zweiten Endgerät (T2) empfangenen Dienstes modifiziert werden.

16. Verfahren gemäß einem der Ansprüche 1 bis 15, wobei die Bedingungen für den Verbrauch/die Nutzung eines zwischen den beiden Kommunikationsendgeräten (1, 2) hergestellten Übertragungsstromes durch Multimedia-Anwendungen modifiziert werden, die den Multimedia-Inhalt von jedem Endgerät beim Übertragen, Empfangen und Berücksichtigen der zusätzlichen über das SIP-Protokoll übertragenen Informationen verbrauchen und aussenden.

17. Verfahren gemäß einem der Ansprüche 1 bis 16, einen Schritt der Bewertung einer Bandbreite aufweisend, die für mindestens einen der identifizierten Austauschkanäle außerhalb einer Sitzung verfügbar ist.

18. Verfahren gemäß einem der Ansprüche 1 bis 17, einen Schritt des erneuten Aushandelns in Echtzeit eines Dienstes aufweisend, wenn Nutzungsbedingungen auf der Ebene des zweiten Endgerätes (T2) modifiziert werden, wobei der Schritt des erneuten Aushandelns zum Verringern eines Bandbreitenverbrauchs durchgeführt wird, wobei die Größe eines auf dem Bildschirm sichtbaren Videofensters modifiziert wird.

19. Verfahren gemäß einem der Ansprüche 1 bis 18, einen Schritt des Speicherns einer Liste der Austauschkanäle in einem Speicher von jedem der beiden Endgeräte (T1, T2) aufweisend, die identifiziert sind und außerhalb einer Sitzung zum Übertragen der Multimedia-Informationen verwendet werden können.

20. Verfahren gemäß einem der Ansprüche 1 bis 19, wobei das Signalisierungsprotokoll das SIP-Protokoll ist und der Schritt (55) des Übertragens von zusätzlichen Informationen zusätzlich zu dem Protokoll aufweist:
- einen Schritt des Schreibens einer Anfrage in einem Textformat durch das erste Endgerät (T1),
- einen Schritt des Codierens der Anfrage,
- einen Schritt des Versendens einer INVITE-Nachricht, wobei die codierte Anfrage in das Call-ID-Feld geleitet wird.

21. Verfahren gemäß Anspruch 20, wobei der Schritt (55) des Übertragens von zusätzlichen Informationen zusätzlich zu dem Protokoll ferner aufweist:
- einen Schritt des Sendens einer Antwortnachricht, die eine Angabe einer vorübergehenden Nichtverfügbarkeit enthält, und in der eine Antwort auf die Anfrage durch das zweite Endgerät (T2) in ein rein beschreibendes oder erläuterndes Feld positioniert wird,
- einen Schritt des Bestätigens des Schließens einer SIP-Sitzung, wobei das erste Endgerät (T1) an das zweite Endgerät (T2) eine ACK-Quittierungs-Nachricht mit derselben Call-ID sendet, zum Anzeigen eines korrekten Empfangs der Antwort auf die Anfrage.

22. Verfahren gemäß Anspruch 21, wobei das rein beschreibende oder erläuternde Feld das "Reason"-Feld ist.

23. Programm eines Verarbeitungsmoduls, das direkt in den Speicher eines Endgerätes (T1, T2, 4) zur Kommunikation mit einem Netzwerk (N) geladen werden kann, zum Steuern der Schritte des Anspruchs 1, 2, 3, 4 oder 5, wenn das Programm auf dem Endgerät (T1, T2, 4) ausgeführt wird.
